# EUROPEAN PATENT SPECIFICATION

(11) **EP 2 497 358 B1**
(45) Date of publication and mention of the grant of the patent: **26.10.2016**
(21) Application number: 12167660.5
(22) Date of filing: 14.06.2007
(51) Int. Cl.: A01K 1/12, A01K 11/00

(54) **An installation for automatically milking an animal**
Installation zum automatischen Melken eines Tieres
Installation pour la traite automatique d'un animal

(30) Priority: 12.07.2006 NL 1032150
(43) Date of publication of application: 12.09.2012
(62) Divisional of application: 07075474.2
(73) Proprietor: MAASLAND N.V., 3147 PA Maassluis (NL)
(72) Inventor: Van den Berg, Karel, 3147 PA Maassluis (NL)
(74) Representative: Octrooibureau Van der Lely N.V.

(56) References cited:
- EP-A2- 1 042 952
- WO-A1-96/01041
- WO-A1-99/25176

## Description

The invention relates to an installation for automatically milking an animal according to the preamble of claim 1.

Such an installation is known from EP 1042 952. In the case of the known installation, the position of the robot arm allows the installation to have a so-called dirty side and a clean side. The dirty side is orientated towards the animal accommodation and comprises the entrance and exit for the animal. The robot arm is fastened at the clean side. When an animal is not willing to enter the box voluntarily, it must be led into the box by the operator. This takes place by fastening a halter around the animal's head and pulling the animal by means of the halter into the box via the entrance of the box. The operator leaves the box via the exit of the box at the dirty side. A disadvantage of such an installation is that the operator gets contaminated when leaving the box.

The invention aims at providing an installation of the above-mentioned type allowing a cleaner mode of operation.

This is achieved by means of an installation according to claim 1. By making use of the passage opening it is possible for the operator to go directly from the inside of the box to the clean side thereof.

Preferably, the width of the passage opening is between 0.3 m and 0.5 m and the height of the passage opening is between 1.0 m and 1.8 m.

It is further advantageous if the passage opening is closable. This prevents an animal from leaving the box via the passage opening or from putting its head through it.

The passage opening is in particular located in the front half of the box. By front half is meant that half in which, seen in longitudinal direction, the animal's head is located in the milking position. In such a construction it is easily possible for an operator to lead an animal into the box by means of a cord and to leave the box himself at the front side thereof.

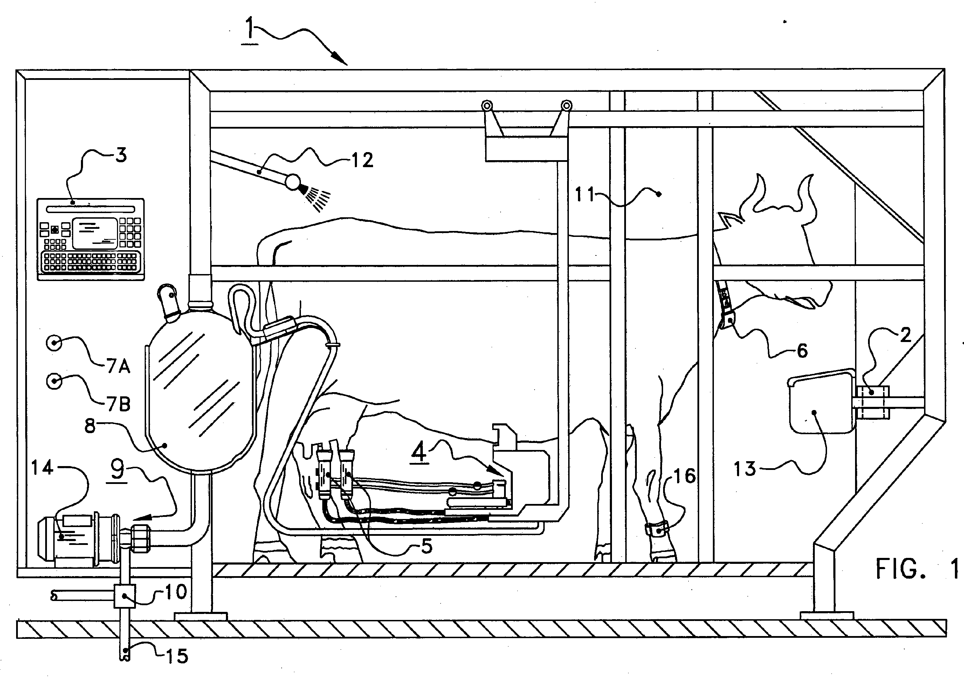

The invention will be explained hereinafter in further detail with reference to an embodiment shown in the drawing, in which Figure 1 is a side view of the installation according to the invention.

Figure 1 shows an installation for milking an animal with an animal recognition 2 for supplying an animal recognition signal representative of the identity of the animal, a computer 3 with a memory and an input device for inputting animal data relating to the animal into the memory, wherein, by operating the input device, the animal recognition signal is automatically linkable in the memory with the animal data relating to the treatment of the animal. The animal recognition signal is in the form of an animal number. The installation further comprises a box 1 for containing the animal and a robot arm 4 for automatically connecting teat cups 5 to the teats of the animal located in the box 1. Said robot arm 4 is movable in horizontal direction along a rail and is movable from a first longitudinal side of the box 1 to under the animal. Automatic connection of the teat cups 5 by means of the arm takes place in a manner known per se. In order to recognize the animal located in the box 1 the installation comprises an animal recognition 2 that is capable of cooperating with a transponder 6 around the neck of the animal. The animal recognition 2 may also be of another type, such as a device recognizing by means of image recognition, an iris scanner or a nose scanner. The input device comprises two push or touch buttons 7A, 7B suitable for inputting animal data relating to two associated different treatments. The installation further comprises a milk collecting vessel 8 in which the milk of one milking run is collected and which also serves for separating air. A separation device 9 for separating milk is disposed at the lower side of the milk collecting vessel 8. The separation device 9 comprises a three-way-valve 10 that is controllable by the computer 3 on the basis of animal data. The computer 3 further controls the different components and the course of the milking process. In order to make it possible to keep the animal in the box 1, the box 1 is provided with bars. These leave sufficient space to make it possible to treat the animal from outside the box 1, for example for giving an injection.

The box 1 comprises at the first longitudinal side a passage opening 11 for giving an operator access from the outside of the box 1 to the inside thereof and vice versa. Said passage opening 11 is constituted by two vertical bars and provides sufficient space for an operator, but is too narrow to let pass the animal to be milked. In a non-shown embodiment, the passage opening 11 is closable, for example by a shiftable or pivotable beam. Such a beam prevents the animal from putting its head through the passage opening 11.

The entrance and exit doors for the animal are not shown. These are located at the other longitudinal side of the box 1. At this side there is also located a (non-shown) second passage opening 11. Owing to the fact that there is a passage opening at both longitudinal sides, it is possible for an operator to use the box as a passage to the animal accommodation.

The installation further comprises a marker 12 that is capable of being activated by the input device 7A, 7B. The marker 12 is designed as a sprayer in order to apply a colorant to the back of the animal. In order to distinguish which treatment has been performed, it is possible to apply several markers 12 with different colours or to spray a particular pattern according to the sort of treatment.

The mode of operation is as follows. An animal enters the box 1 voluntarily, or is led into the box 1 by an operator, for example by means of a cord around its head. In the latter case, the operator will leave the box 1 at the front side through the passage opening 11.

At the front side of the box 1, near the feed trough 13, there is disposed the animal recognition 2 that recognizes the animal via the transponder 6 and generates an animal recognition signal. In order to prevent animals located close to the installation from being disturbed by transponders 6, the animal recognition signal is only used by the computer 3 if the entrance and exit doors are both completely closed. Furthermore, the animal recognition signal is only used by the computer 3 if during a particular minimum period of time the same identity is registered. If several identities are registered, an alarm will go off.

In the register of the identified animal it is indicated that the animal in question has to undergo a treatment. Subsequently, via the mobile telephone, the computer 3 draws the operator's attention to the fact that the animal in question is present in the box 1. Subsequently, the operator will treat the animal, for example by injecting it with an antibiotic. This takes place from the outside of the box 1 through the bars of the box 1.

In a non-shown embodiment, the installation comprises a medicine reader in the form of a bar code or chip code reader. In this case, the operator holds the packing of the medicine X against the medicine reader, after which the code on the packing is read and passed on to the computer 3. It is also possible that the computer 3 has released itself the medicine X via a so-called medicine chest. Such a chest and its mode of operation are described in patent application WO-A-0036568. In the latter case, the computer 3 assumes that the treatment takes place with the medicine X that has been released by the medicine chest. In a particular embodiment, release of the medicine is only possible if the bar code/chip code reader is activated by a so-called treatment tag 16. Said treatment tag 16 is detachably disposed on a leg of the animal and may be disposed by another person. In this manner it is possible to disconnect diagnosis and treatment from each other and also to make sure that a treatment has taken place. The operator detaches the treatment tag 16, scans it with the bar code or chip code reader, after which the medicine chest releases the allocated medicine.

When the treatment has been performed, the operator presses the push or touch button 'antibiotics' 7A. The animal data, i.e. 'treatment with medicine X', is now automatically linked with the animal number and stored in the memory of the computer 3. Besides, the point of time of pressing the push or touch button, the identity of the operator, if known, and, in the case of several boxes, the box number, are stored as well. In the memory of the computer 3 'treatment with medicine X' is linked with '3-day separation'. The computer 3 will separate from now on the milk obtained from this animal during the next three days. Pressing the push or touch button 7A, 7B has also activated the marker 12 that sprays a colorant on the back. Subsequently, the animal is automatically milked in a known manner. The robot arm 4 detects the teats, connects the teat cups 5 and through the milking vacuum the milk is drawn from the udder and received in the milk collecting vessel 8. After the milking has been finished, the computer 3 activates the separation device 9 on the basis of the action '3-day separation'. The three-way-valve 10 is controlled in such a way that the line from the pump 14 to the milk tank is closed and the line to the sewer 15 is open. Subsequently, the computer 3 controls the pump 14 and the milk collecting vessel 8 is emptied by pumping its contents to the sewer 15.

In a non-shown embodiment, the installation comprises a pivotable platform on which the animal is located at least during milking. Connection of the teat cups takes place by means of a mobile milking robot. Such a milking robot and such a pivotable platform are described in Dutch patent NL-1024522-C. In this case, the input device is provided on the mobile milking robot or on the pivotable platform in the vicinity of a milking parlour.

The invention is not limited to automatic milking and also applicable in a conventional milking installation in which the animals to be milked are arranged in rows. In that case, a milking parlour has to be considered as the box 1.

## Claims

1. An installation for automatically milking an animal provided with a box (1) for containing an animal to be milked and with a robot arm (4) for automatically connecting teat cups (5) to the teats of the animal, the robot arm (4) being movable from a first longitudinal side of the box (1) to under the animal, the installation further comprising an entrance and an exit door for the animal on the opposite longitudinal side of the box, **characterized in that** the box (1) comprises at the first longitudinal side a passage opening (11) for giving an operator access from the outside of the box (1) to the inside thereof and vice versa, the passage opening providing sufficient space for the operator but being too narrow to let the pass the animal to be milked.

2. An installation as claimed in claim 1, **characterized in that** the width of the passage opening (11) is between 0.3 m and 0.5 m.

3. An installation as claimed in claim 1 or 2, **characterized in that** the height of the passage opening (11) is between 1.0 m and 1.8 m.

4. An installation as claimed in any one of the preceding claims, **characterized in that** the passage opening (11) is closable.

5. An installation as claimed in any one of the preceding claims, **characterized in that** the passage opening (11) is located in the front half of the box (1).

6. A installation as claimed in claim 1, **characterized in that** there is located on said opposite longitudinal side a second passage opening.

## Patentansprüche

1. Anlage zum automatischen Melken eines Tiers, die mit einem Kasten (1) zum Aufnehmen eines zu melkenden Tiers und mit einem Roboterarm (4) zum automatischen Verbinden von Zitzenbechern (5) mit den Zitzen des Tiers versehen ist, wobei der Roboterarm (4) von einer ersten Längsseite des Kastens (1) bis unter das Tier beweglich ist, wobei die Anlage ferner eine Eingangs- und eine Ausgangstür für das Tier auf der gegenüberliegenden Längsseite des Kastens umfasst, **dadurch gekennzeichnet, dass** der Kasten (1) an der ersten Längsseite eine Durchgangsöffnung (11) zum Gewähren von Bedienerzugang von außerhalb des Kastens (1) zu dessen Innenraum und umgekehrt umfasst, wobei die Durchgangsöffnung ausreichend Raum für den Bediener gewährt, aber zu schmal ist, als dass das zu melkende Tier passieren könnte.

2. Anlage nach Anspruch 1, **dadurch gekennzeichnet, dass** die Breite der Durchgangsöffnung (11) zwischen 0,3 m und 0,5 m beträgt.

3. Anlage nach Anspruch 1 oder 2, **dadurch gekennzeichnet, dass** die Höhe der Durchgangsöffnung (11) zwischen 1,0 m und 1,8 m beträgt.

4. Anlage nach einem der vorhergehenden Ansprüche, **dadurch gekennzeichnet, dass** die Durchgangsöffnung (11) schließbar ist.

5. Anlage nach einem der vorhergehenden Ansprüche, **dadurch gekennzeichnet, dass** die Durchgangsöffnung (11) in der vorderen Hälfte des Kastens (1) positioniert ist.

6. Anlage nach Anspruch 1, **dadurch gekennzeichnet, dass** auf der gegenüberliegenden Längsseite eine zweite Durchgangsöffnung positioniert ist.

## Revendications

1. Installation pour la traite automatique d'un animal pourvue d'un caisson (1) destiné à contenir un animal à traire et d'un bras robotique (4) servant à raccorder automatiquement des gobelets trayeurs (5) aux trayons de l'animal, le bras robotique (4) étant déplaçable d'un premier côté longitudinal du caisson (1) à une position sous l'animal, l'installation comprenant en outre une porte d'entrée et une porte de sortie pour l'animal sur le côté longitudinal opposé du caisson, **caractérisée en ce que** le caisson (1) comprend, au niveau du premier côté longitudinal, une ouverture de passage (11) servant à permettre à un opérateur d'accéder, depuis l'extérieur du caisson (1), à l'intérieur de celui-ci et vice versa, l'ouverture de passage offrant suffisamment d'espace pour l'opérateur mais étant trop étroite pour laisser passer l'animal à traire.

2. Installation selon la revendication 1, **caractérisée en ce que** la largeur de l'ouverture de passage (11) est comprise entre 0,3 m et 0,5 m.

3. Installation selon la revendication 1 ou 2, **caractérisée en ce que** la hauteur de l'ouverture de passage (11) est comprise entre 1 m et 1,8 m.

4. Installation selon l'une quelconque des revendications précédentes, **caractérisée en ce que** l'ouverture de passage (11) peut être fermée.

5. Installation selon l'une quelconque des revendications précédentes, **caractérisée en ce que** l'ouverture de passage (11) est située dans la moitié avant du caisson (1).

6. Installation selon la revendication 1, **caractérisée en ce que**, sur ledit côté longitudinal opposé, se trouve une seconde ouverture de passage.
